(19) **Europäisches Patentamt / European Patent Office / Office européen des brevets**

(11) **EP 2 855 240 B1**

(12) **FASCICULE DE BREVET EUROPEEN**

(45) Date de publication et mention
de la délivrance du brevet:
**28.12.2016 Bulletin 2016/52**

(51) Int Cl.:
**B62D 6/00** *(2006.01)*    **B62D 7/15** *(2006.01)*
**B62D 15/02** *(2006.01)*

(21) Numéro de dépôt: **13727247.2**

(22) Date de dépôt: **02.05.2013**

(86) Numéro de dépôt international:
**PCT/FR2013/050974**

(87) Numéro de publication internationale:
**WO 2013/182769 (12.12.2013 Gazette 2013/50)**

(54) **DISPOSITIF DE CONTRÔLE DE TRAJECTOIRE D'UN VÉHICULE**

VORRICHTUNG ZUR STEUERUNG DER BEWEGUNGSBAHN EINES FAHRZEUGS

SYSTEM FOR TRAJECTORY CONTROL OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.06.2012 FR 1255188**

(43) Date de publication de la demande:
**08.04.2015 Bulletin 2015/15**

(73) Titulaire: **Renault S.A.S.**
**92100 Boulogne-Billancourt (FR)**

(72) Inventeurs:
• **MINOIU ENACHE, Nicoleta**
**F-78000 Versailles (FR)**
• **GUEGAN, Stéphane**
**F-78000 Versailles (FR)**

(56) Documents cités:
**WO-A1-2010/125290    WO-A1-2011/042791
WO-A1-2011/161535    US-A1- 2008 119 988**

**Description**

L'invention concerne un dispositif d'élaboration en temps réel d'activation de contrôle de trajectoire d'un véhicule. L'invention concerne aussi un véhicule équipé de ce dispositif.

L'invention répond notamment à un besoin de prévention active des accidents. Les accidents par sortie involontaire de la voie de circulation représentent encore aujourd'hui une part importante de l'accidentologie. Pour renforcer la sécurité des passagers, les constructeurs automobiles mettent déjà en oeuvre une prévention passive en réalisant des véhicules de plus en plus résistants aux chocs et absorbant une part importante de l'énergie due à l'impact. La prévention active consiste à rendre le véhicule capable d'évaluer sa dynamique et de reconnaître son environnement afin de disposer d'une mesure de risque qui reflète la situation. Des actions peuvent alors être entreprises automatiquement ou en partage avec le conducteur afin de maintenir le véhicule dans sa voie de circulation en cas de manque de vigilance, d'endormissement, de malaise ou d'événement extérieur impromptu tel qu'une rafale soudaine de vent ou une irrégularité conséquente de la chaussée. Il s'agit de la fonction de sécurité active de maintien de trajectoire (« Lane Keeping » ou « Lane Departure Avoidance » en anglais).

Parmi les connaissances de l'état antérieur de la technique, le document US7236884 divulgue un appareil de prévention de sortie de voie pour un véhicule automobile. Une force de freinage et/ou un pilotage de direction sont appliqués pour contrôler une vitesse de lacet de façon à ramener le véhicule au centre de la voie de circulation en cas de déviation causée par une irrégularité de la route.

Le procédé et le dispositif divulgués dans ce document agit sur la direction des roues avant qui, pour un conducteur du véhicule, est générateur de trouble. Le conducteur peut en effet ressentir une gêne dans ce qu'il ressent sur son volant.

De façon générale dans l'état antérieur de la technique, l'assistance active est fournie soit par l'intermédiaire de la direction assistée électrique des roues avant, soit par freinage différentiel des roues. Dans le premier cas le conducteur ressent au volant l'intervention de l'assistance, fait qui peut être désagréable ou source d'incompréhension. Dans le deuxième cas un freinage non souhaité du véhicule est réalisé et cette action peut être mal perçue par le conducteur. D'autre part, l'action sur le freinage est nécessairement limitée dans le temps et ses occurrences, en d'autres termes le nombre des freinages possibles à faire accepter par le conducteur, réduites. L'action sur le freinage ne permet pas d'envisager une aide permanente de maintien dans la voie.

Le document WO2010/125290 révèle l'état de la technique le plus proche selon le préambule de la revendication 1 et divulgue un procédé d'aide au contrôle de la trajectoire d'un véhicule automobile équipé d'un système de braquage des roues arrière.

Un problème important pour réaliser des automatismes de fonctions actives de maintien de trajectoire, est celui du partage des actions de guidage du véhicule avec le conducteur.

Un problème incident est celui de trouver l'actionneur adéquat pour un bon compromis entre l'action automatique active qui change la trajectoire du véhicule pour prévenir la sortie de voie et le ressenti du conducteur dont les actions ne sont ni connues, ni prévisibles.

L'invention a pour objectif de répondre aux problèmes posés par l'état antérieur de la technique, notamment en termes d'efficacité tout en évitant des pertes d'énergie regrettables.

Pour atteindre cet objectif, l'invention se fixe le but de ne pas utiliser le même actionneur que le conducteur de façon à ne pas interférer avec lui et d'éviter de perdre de l'énergie et de la vitesse comme c'est le cas lors d'un freinage.

Dans ce but, l'invention a pour objet un dispositif de contrôle de trajectoire d'un véhicule, comprenant d'une part au moins une entrée de réception d'au moins une grandeur représentative d'un ou plusieurs écarts entre une trajectoire de référence et une trajectoire effective du véhicule, et d'autre part au moins une sortie de production en temps réel d'au moins une consigne de braquage applicable à au moins une roue arrière du véhicule de manière à maintenir et/ou ramener ledit véhicule sur sa trajectoire de référence, caractérisé en ce qu'il comprend :

- au moins un module d'élaboration en temps réel de ladite consigne de braquage variant linéairement par rapport à chaque écart reçu avec un coefficient de proportionnalité quantifié hors ligne de façon à optimiser la manière de varier de la consigne de braquage ;
- au moins un module de supervision paramétré hors ligne pour activer le module d'élaboration lorsque module de supervision détecte en temps réel un risque calculé de franchissement de seuil par au moins un écart.

2. Selon l'invention ledit module de supervision comprend des moyens pour déterminer en temps réel au moins un maximum atteignable par au moins un écart en cas d'activation du module d'élaboration de manière à détecter ledit risque de franchissement lorsque ledit maximum atteignable est supérieur ou égal à une valeur de seuil prédéterminée.

Particulièrement, les moyens comprennent un ensemble de cellules mémoire de données adressables en temps réel par au moins ladite grandeur représentative d'un ou plusieurs écarts reçue en entrée du dispositif et contenant le ou les maxima atteignables associés à des valeurs discrètes de ladite grandeur représentative.

Selon l'invention, le ou les maxima atteignables sont calculés hors ligne au moyen d'un programme de recherche par optimisation convexe d'une matrice de convergence qui satisfait au moins une inégalité matricielle linéaire de sorte que lesdits maxima atteignables sont égaux aux racines carrées des éléments diagonaux de ladite matrice de convergence.

Alternativement, lesdits moyens comprennent un ensemble de cellules mémoire de programme accédant en temps réel à au moins ladite grandeur représentative d'un ou plusieurs écarts reçue en entrée du dispositif et contenant un programme de recherche par optimisation convexe d'une matrice de convergence qui satisfait au moins une inégalité matricielle linéaire de sorte que lesdits maxima atteignables sont égaux aux racines carrées des éléments diagonaux de ladite matrice de convergence.

De préférence, ledit programme de recherche par optimisation convexe part d'une zone de départ minimale englobant le ou les écarts.

Particulièrement, ladite zone de départ minimale englobe aussi au moins une valeur de contexte dynamique.

L'invention a aussi pour objet un procédé de contrôle de trajectoire d'un véhicule en produisant en temps réel, à partir d'au moins une grandeur représentative d'un ou plusieurs écarts entre une trajectoire de référence et une trajectoire effective du véhicule, au moins une consigne de braquage applicable à au moins une roue arrière du véhicule de manière à maintenir et/ou ramener ledit véhicule sur sa trajectoire de référence, caractérisé en ce qu'il comprend des étapes consistant à :

- déterminer en temps réel au moins un maximum atteignable par au moins un écart en cas d'application d'une consigne de braquage à au moins une roue arrière du véhicule ;
- élaborer en temps réel lorsque ledit maximum atteignable est supérieur ou égal à une valeur de seuil prédéterminée, ladite consigne de braquage variant linéairement par rapport à chaque écart reçu avec un coefficient de proportionnalité quantifié hors ligne de façon à optimiser la manière de varier de la consigne de braquage de manière à appliquer ladite consigne de braquage à au moins une roue arrière du véhicule.

Particulièrement, le procédé comprend des étapes consistant à :

- accéder en temps réel à au moins ladite grandeur représentative d'un ou plusieurs écarts ;
- rechercher par optimisation convexe une matrice de convergence qui satisfait au moins une inégalité matricielle linéaire de sorte que lesdits maxima atteignables sont égaux aux racines carrées des éléments diagonaux de ladite matrice de convergence.

L'invention a encore pour objet un programme d'ordinateur comprenant des instructions de code de programme pour l'exécution des étapes du procédé selon l'invention lorsque ledit programme est exécuté sur un ordinateur.

La solution de l'invention présente plusieurs avantages.

Les roues arrière du véhicule sont braquées suivant une loi de commande en boucle fermée qui prend en compte l'action du conducteur sur le volant et de la position du véhicule sur la voie de circulation.

La loi de commande des roues arrières directrices permet une présence simultanée d'une action automatique avec l'action du conducteur pour l'aider à maintenir le véhicule au centre de la voie en le soulageant et, en absence de l'action du conducteur, permet d'éviter les sorties de voie involontaires.

Le calcul de risque de franchissement de seuil permet de limiter l'intervention de l'assistance en laissant une autonomie la plus large au conducteur.

La loi de commande en boucle fermée est stable.

D'autres caractéristiques et avantages apparaîtront à la lecture de la description qui suit, en référence aux dessins annexés dans lesquels :

- la figure 1 représente un véhicule auquel l'invention est applicable,
- la figure 2 est un schéma de dispositif conforme à l'invention,
- la figure 3 est un schéma de modélisation du parcours du véhicule,
- la figure 4 est une courbe d'évolution potentielle des écarts de trajectoire,
- la figure 5 montre des étapes de procédé conforme à l'invention.

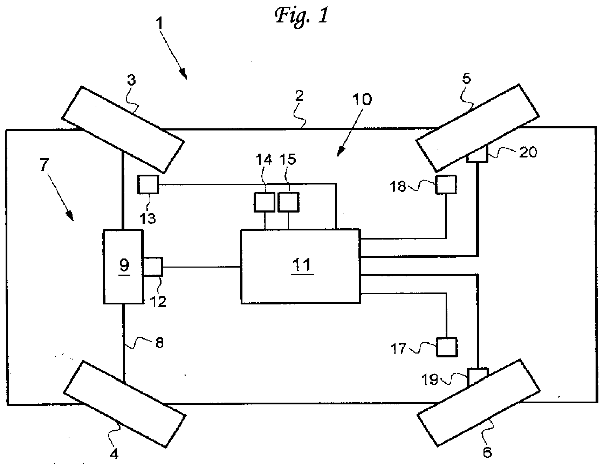

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 comprend une unité de commande 11, un capteur 12 de la position de braquage des roues avant 3 et 4, par exemple positionné sur l'actionneur 9, un capteur 13 de la vitesse de rotation des roues avant permettant de déterminer la vitesse V du véhicule, un capteur 14 de la vitesse de lacet $\dot{\psi}$ = $\partial\Psi/\partial t$ du véhicule, c'est-à-dire de la vitesse de rotation du véhicule autour de son centre de gravité suivant un axe vertical, et un capteur 15 de l'accélération latérale au centre de gravité du véhicule. Le capteur 14 est par exemple un gyroscope. Le capteur 15 n'est généralement pas nécessaire au fonctionnement de la présente invention.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

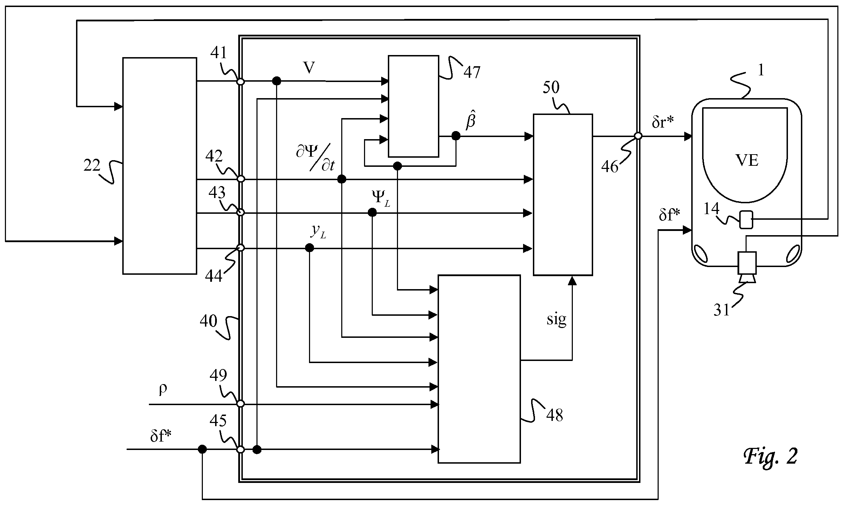

Plus précisément, l'unité de commande 11 comprend un dispositif de contrôle 40 de trajectoire du véhicule 1, expliqué à présent en référence à la figure 2.

Dans le mode de réalisation illustré par la figure 2, le dispositif de contrôle 40 comprend d'une part des entrées 41, 42, 43, 44 de réception d'une grandeur représentative totalement ou partiellement respectivement d'un écart $\beta$, $\partial\Psi/\partial t$, $\Psi_L$, $y_L$ entre une trajectoire de référence et une trajectoire effective du véhicule et d'autre part au moins une sortie 46 de production d'une consigne de braquage $\delta_r^*$ qui est appliquée aux roues arrière 5, 6 du véhicule 1.

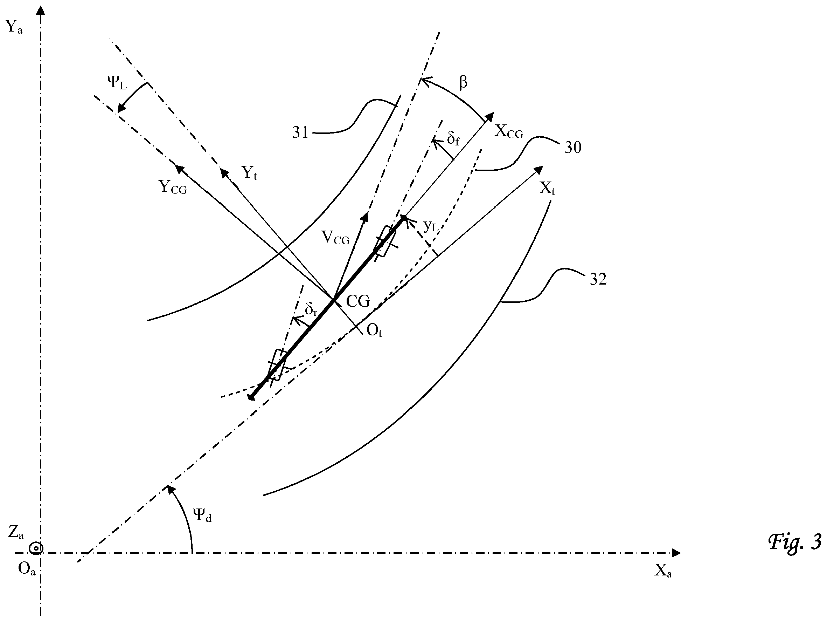

Avant de rentrer dans le détail de la structure et du fonctionnement du dispositif 40, on rappelle les lois comportementales du véhicule 1 sur une trajectoire 30 de référence représentée en pointillés sur la figure 3.

L'analyse du suivi de la trajectoire 30 par le véhicule 1 est abordée par un modèle bicyclette. De manière connue dans le domaine technique considéré, le modèle bicyclette assimile le véhicule 1 à une barre filiforme qui passe par le centre de gravité CG du véhicule et qui comporte le même moment d'inertie J autour d'un axe perpendiculaire au plan de la figure passant par le centre de gravité, et la même masse M que le véhicule.

La trajectoire 30 de référence est représentée dans un repère absolu $\{O_a, X_a, Y_a\}$. A chaque instant t, la position du véhicule est repérée par rapport à un point $O_t$ de la trajectoire qui constitue l'origine d'un repère relatif cinématique $\{O_t, X_t, Y_t\}$ dans lequel l'axe $X_t$ est tangent à la trajectoire au point $O_t$. L'axe $X_t$ fait un angle $\Psi_d$ avec l'axe $X_a$ du repère absolu. L'angle $\Psi_d$ est généralement nommé angle de cap visé dans le domaine technique auquel appartient l'invention.

Lorsque le véhicule suit parfaitement sa trajectoire à l'instant t, le centre de gravité CG est confondu avec le point $O_t$ de la trajectoire 30. Ce n'est pas le cas lorsque le centre de gravité CG est déporté sur l'axe $Y_t$ qui est perpendiculaire à l'axe $X_t$ dans le plan de la figure 3.

Le centre de gravité CG constitue l'origine d'un repère relatif lié $\{CG, X_{CG}, Y_{CG}\}$ au véhicule dans lequel l'axe $X_{CG}$ est colinéaire à la barre à laquelle le véhicule est assimilé dans le modèle bicyclette. Le repère relatif lié $\{CG, X_{CG}, Y_{CG}\}$ fait un angle $\Psi_L$ avec le repère relatif cinématique $\{O_t, X_t, Y_t\}$. La valeur de l'angle $\Psi_L$ est nulle dans le cas idéal où le véhicule est dirigé selon la tangente à la trajectoire 30. Dans le cas contraire, une valeur non nulle de l'angle $\Psi_L$ constitue un écart de trajectoire.

Par rapport au repère absolu $\{O_a, X_a, Y_a\}$, le centre de gravité CG se déplace à une vitesse $V_{CG}$ dont le vecteur, exprimé dans le repère relatif lié $\{O_t, X_{CG}, Y_{CG}\}$ fait un angle P avec l'axe $X_{CG}$. Le vecteur de vitesse au centre de gravité comporte alors une composante $v = V_{CG} \cdot \cos\beta$ selon l'axe $X_{CG}$ et une composante $u = V_{CG} \cdot \sin\beta$ selon l'axe $Y_{CG}$. La vitesse u correspond à une vitesse de ripage transversale au véhicule. La vitesse v correspond à une vitesse longitudinale du véhicule égale à la vitesse $V_{CG}$ en absence de ripage. L'angle P est généralement nommé angle de dérive.

On rappelle que dans le domaine technique considéré, la vitesse de rotation du véhicule autour d'un axe $Z_a$ perpendiculaire au plan de la figure, est nommée vitesse de lacet. Dans le cadre des explications de l'invention qui suivent, la vitesse de lacet est désignée par la lettre r. La vitesse de lacet étant la dérivée par rapport au temps de l'angle de cap effectif $\Psi$ du véhicule, elle est définie par la formule :

$$r = \frac{\partial\Psi}{\partial t} = \frac{\partial\Psi_d}{\partial t} + \frac{\partial\Psi_L}{\partial t}$$

Sur le modèle bicyclette illustré par la figure 3, les roues avant 3, 4 sont représentées par une roue unique avant qui fait un angle $\delta_f$ avec l'axe $X_{CG}$ à une distance $l_f$ du centre de gravité CG, distance non reportée sur la figure par souci de clarté. La roue unique avant présente une rigidité de dérive égale à la somme des rigidités de dérive $c_f$ de chacune des roues 3, 4, généralement de valeurs identiques obtenues auprès du fournisseur de pneumatique des roues ou au moyen d'essais de roulage sur circuit.

De même, les roues arrière 5, 6 sont représentées par une roue unique arrière qui fait un angle $\delta_r$ avec l'axe $X_{CG}$ à une distance $l_r$ du centre de gravité CG, distance ici encore non reportée sur la figure par souci de clarté. La roue unique arrière présente aussi une rigidité de dérive égale à la somme des rigidités de dérive $c_r$ de chacune des roues 5, 6, généralement de valeurs identiques obtenues également auprès du fournisseur de pneumatique des roues ou au moyen d'essais de roulage sur circuit.

Lorsque les angles de braquage $\delta_f$ et $\delta_r$ sont de valeur nulle, la variation $\dot{\beta}$ de l'angle de dérive et la variation r de la vitesse de lacet obéissent aux lois de la dynamique sans perturbations que l'on rappelle ci-dessous en considérant des angles de dérives faibles :

$$\dot{\beta} = -\frac{2(c_r + c_f)}{Mv}\beta - \left(1 - \frac{2(l_r c_r - l_f c_f)}{Mv^2}\right)r$$

$$\dot{r} = -\frac{2(l_r c_r - l_f c_f)}{J}\beta - \left(\frac{2(l_r^2 c_r - l_f^2 c_f)}{Jv}\right)r$$

Dans la formule de définition de la vitesse de lacet qui est donnée ci-dessus, la variation de l'angle de cap peut aussi s'exprimer de la manière suivante en fonction de la courbure $\rho_{ref}$ de la trajectoire 30 de référence, la courbure $\rho_{ref}$ étant égale à l'inverse du rayon de courbure R au point $O_t$ à chaque instant t.

$$\frac{\partial \Psi_d}{\partial t} = v \cdot \rho_{ref}$$

De la sorte, pour une trajectoire rectiligne uniforme, on obtient :

$$\frac{\partial \Psi_L}{\partial t} = r$$

Dans le modèle bicyclette de la figure 3 qui représente le véhicule 1, on considère l'écart $y_L$ entre l'axe $X_t$ et l'axe $X_{CG}$ mesurable sur un front du véhicule à une distance $l_s$ en avant du centre de gravité CG.

On note que l'écart est généralement nul lorsque le véhicule suit parfaitement sa trajectoire, notamment lorsque le déport transversal du centre de gravité CG et l'angle de dérive $\beta$ sont de valeur nulle ou se compensent. Il existe aussi des cas dans lesquels le véhicule suit parfaitement sa trajectoire avec un écart latéral non nul en avant du véhicule en raison de la courbure de la trajectoire de référence.

On constate sur le schéma de la figure 3 qu'une variation d'écart d'axe $\dot{y}_L = \frac{\partial y_L}{\partial t}$ vérifie l'équation géométrique suivante :

$$\dot{y}_L = v \cdot (\tan\beta + \tan\Psi_L) + l_s \cdot r$$

Lorsque les angles P et $\Psi_L$ sont petits, l'équation géométrique ci-dessus peut encore s'écrire :

$$\dot{y}_L = v \cdot \beta + l_s \cdot r + v \cdot \Psi_L$$

La mise en oeuvre de l'invention considère un vecteur d'état x défini de la manière suivante en utilisant la convention d'écriture du langage matriciel pour laquelle la lettre T portée en exposant d'un vecteur ou d'une matrice, désigne la transposée de ce vecteur ou de cette matrice :

$$(\beta, \; r, \; \Psi_L, \; y_L)^T = x$$

Les lois physiques expliquées ci-dessus pour évaluer le comportement du véhicule sur sa trajectoire, peuvent être synthétisées au moyen d'une matrice A d'évolution d'état ci-dessous définie.

$$A = \begin{pmatrix} -\dfrac{2(c_r + c_f)}{Mv} & -1 + \dfrac{2(l_r c_r - l_f c_f)}{Mv^2} & 0 & 0 \\ \dfrac{2(l_r c_r - l_f c_f)}{J} & -\dfrac{2(l_r^2 c_r + l_f^2 c_f)}{Jv} & 0 & 0 \\ 0 & 1 & 0 & 0 \\ v & l_s & v & 0 \end{pmatrix}$$

On note que les paramètres qui interviennent dans la matrice A d'évolution d'état, sont constants lors d'un même déplacement du véhicule à l'exception du paramètre de vitesse v.

En absence de perturbations extérieures, le vecteur d'état x évolue alors dans le temps de la manière suivante sur une trajectoire rectiligne :

$$\dot{x} = Ax$$

Lorsque la trajectoire 30 n'est pas rectiligne, la courbure $\rho_{ref}$ introduit un vecteur $B_\rho$ de perturbation sur la variation $\dot{x}$ du vecteur d'état telle que :

$$\dot{x} = Ax + B_\rho \rho_{ref}$$

$$\text{Avec } B_\rho = (0, 0, -v, 0)^T$$

D'autres actions extérieures au système de maintien du véhicule sur sa trajectoire, volontaires ou non, sont considérées comme des perturbations qui peuvent ou non se compenser les unes les autres.

Ainsi par exemple, le braquage des roues avant commandé par le conducteur, notamment pour se conformer à la courbure de trajectoire, introduit aussi un vecteur $B_f$ de perturbation qui intervient sur l'évolution temporelle du vecteur d'état x proportionnellement à l'angle de braquage $\delta_f$ des roues avant piloté à partir du volant entre les mains du conducteur, voire par un système de pilotage automatique, l'un comme l'autre hors du cadre de l'invention.

$$\dot{x} = Ax + B_f \delta_f$$

D'autres perturbations, plus aléatoires et plus difficilement mesurables, peuvent aussi intervenir comme par exemple, une rafale de vents transversaux ou une discontinuité d'adhérence de la chaussée due par exemple à une plaque de verglas.

Maintenant que nous avons expliqué, parmi les lois physiques qui régissent le comportement du véhicule par rapport à la trajectoire de référence 30, celles considérées essentielles dans le cadre de l'invention, nous allons expliquer comment l'invention intervient sur le vecteur d'état x pour l'amener et le maintenir de manière stable à des valeurs qui correspondent à un maintien du véhicule sur sa trajectoire.

Le dispositif 40 comprend un module 50 agencé pour élaborer en temps réel une consigne stabilisante $\delta_r^*$. En d'autres termes, la consigne $\delta_r^*$ cherche à obtenir un vecteur d'état x qui traduit un suivi parfait de la trajectoire de référence 30 de manière constante.

Pour ce faire, le module 50 reçoit à chaque instant t, la valeur d'au moins une, et de préférence de chacune des valeurs des variables d'état du vecteur d'état x, notamment de chacun des écarts $\beta$, $\Psi_L$, $y_L$ et de la vitesse de lacet r effective. La vitesse de lacet r effective comporte la somme d'une vitesse de lacet conforme à la trajectoire et un écart de vitesse de lacet par rapport à ladite vitesse de lacet conforme. Ainsi, une partie seulement de la vitesse de lacet r est représentative d'un écart de trajectoire lorsqu'il existe une vitesse de lacet conforme à la trajectoire qui présente une courbure. La totalité de la vitesse de lacet r est représentative d'un écart de trajectoire lorsque la trajectoire est rectiligne.

Pour mesurer ou estimer les valeurs des variables d'état, le véhicule 1 comprend une caméra 31 en plus du capteur 14. La caméra 31 est disposée à l'avant du véhicule, par exemple au niveau du rétroviseur central pour capturer des images de la route à l'avant du véhicule et en déduire au moyen d'un logiciel de traitement d'images, la position du véhicule sur la route. La caméra 31 est particulièrement utile pour mesurer l'écart transversal $y_L$. Le capteur 14, de préférence sous forme de gyroscope, délivre en temps réel la vitesse de lacet r véhicule dans le repère fixe $\{O_a, X_a, Y_a\}$. D'autre part, l'angle $\Psi_L$ peut être obtenu mais non nécessairement au moyen d'un compas électronique de type connu ou au moyen d'algorithmes de traitement d'image semblables à ceux utilisés pour estimer l'écart latéral $y_L$.

Un bloc d'entrée 22 reçoit les signaux en provenance des capteurs 12 à 14, et notamment la vitesse du véhicule V, la vitesse de lacet $r = \dot{\psi}$ et l'angle de roues avant $\delta_f$. La vitesse du véhicule peut être obtenue en faisant la moyenne de la vitesse des roues avant et/ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues. Le bloc 22 transmet la vitesse de lacet r sur l'entrée 42, la valeur de l'écart d'angle $\Psi_L$ sur l'entrée 43 et la valeur de l'écart $y_L$ sur l'entrée 44, valeurs qui sont communiquées en temps réel au module 50. Si le bloc 22 dispose de moyens pour estimer l'angle de dérive $\beta$, la valeur de l'angle de dérive est transmise sur l'entrée 41 pour être communiquée directement au module 50. Pour les cas où le bloc 22 ne dispose pas de moyens pour estimer l'angle de dérive $\beta$, le dispositif 40 peut comprendre un module 47 qui estime l'angle de dérive $\beta$ à partir de la vitesse v du véhicule transmise alors sur l'entrée 41, de l'angle de braquage des roues avant transmis sur l'entrée 45 et de la vitesse de lacet r déjà reçue sur l'entrée 42. Le module 47 génère alors un angle de dérive estimé $\beta$ à destination du module 50, en utilisant par exemple l'observateur d'état enseigné par le brevet EP1544080B1.

Le module 50 élabore la consigne $\delta_r^*$ en multipliant l'écart $\Psi_L$ et/ou $y_L$ respectivement par un facteur de gain $k_\psi$, $k_y$ en vue de l'exploiter dans le braquage des roues arrière pour annuler chaque écart traité.

De préférence, le module 50 contient en mémoire au moins un vecteur de gain K de dimension égale à celle du vecteur d'état x.

$$K = [\ k_\beta,\ k_r,\ k_\Psi,\ k_y\ ]$$

Le module 50 élabore alors la consigne $\delta_r^*$ en effectuant le produit scalaire du vecteur de gain K par le vecteur d'état x.

$$\delta_0^* = K \cdot x = k_\beta \hat{\beta} + k_r r + k_\Psi \Psi_L + k_y y_L$$

Ainsi, la consigne $\delta_r^*$ varie linéairement par rapport à au moins un écart $\Psi_L$, $y_L$ avec un coefficient de proportionnalité $k_\psi$, $k_y$. Le ou les coefficients de proportionnalité sont déterminé hors ligne de façon à optimiser la manière de varier de la consigne stabilisante $\delta_r^*$ comme nous le verrons dans la suite de la description.

Lorsque la consigne $\delta_r^*$ est transmise sur la sortie 46 pour être appliquée aux roues directrice arrière en tant que consigne de braquage $\delta_r^*$, son expression dans sa forme la plus simple, est donnée par l'expression :

$$\delta_r^* = K \cdot x = k_\beta \hat{\beta} + k_r r + k_\Psi \Psi_L + k_y y_L$$

La référence $\delta_r^*$ de braquage appliquée aux actionneurs 19, 20 des roues arrière, provoque un braquage $\delta_r$ qui, à la constante de temps de réponse près des actionneurs, est égale à la référence $\delta_r^*$ de braquage.

On rappelle qu'un angle de braquage $^\wedge\delta_r$ intervient sur les variables d'état de la manière suivante :

$$
\begin{pmatrix} \dot{\beta} \\ \dot{r} \\ \dot{\Psi}_L \\ \dot{y}_L \end{pmatrix} = \begin{pmatrix} -\dfrac{2(c_r + c_f)}{Mv} & -1 + \dfrac{2(l_r c_r - l_f c_f)}{Mv^2} & 0 & 0 \\ \dfrac{2(l_r c_r - l_f c_f)}{J} & -\dfrac{2(l_r^2 c_r + l_f^2 c_f)}{Jv} & 0 & 0 \\ 0 & 1 & 0 & 0 \\ v & l_s & v & 0 \end{pmatrix} \cdot \begin{pmatrix} \beta \\ r \\ \Psi_L \\ y_L \end{pmatrix} + \begin{pmatrix} \dfrac{2c_r}{Mv} \\ -\dfrac{2l_r c_r}{J} \\ 0 \\ 0 \end{pmatrix} \cdot \left( \delta_r \right)^T
$$

En définissant le vecteur d'interaction Br tel que :

$$
\mathrm{Br} = \left[ \frac{2c_r}{Mv}, -\frac{2l_r c_r}{J}, 0, 0 \right]^T
$$

On obtient l'équation d'état du véhicule en boucle fermée :

$$
\dot{x} = \left( A + B_r \cdot K \right) \cdot x = A_{cl} \cdot x
$$

Plusieurs remarques sont à faire pour le choix de la loi de commande. La stabilité dynamique du véhicule relative à la vitesse de lacet et à l'angle de dérive est contrôlée par les facteurs $k_\beta \hat{\beta} + k_r r$. La tenue de route sur la voie de circulation est contrôlée par les facteurs $k_{\Psi L} \Psi L + k_{yL} y_L$

On note aussi que la matrice d'asservissement $A_{cl}$ en boucle fermée définie dans l'équation d'état explicitée ci-dessus, comporte la matrice A d'évolution d'état du véhicule et le vecteur d'interaction Br multiplié par la transposée du vecteur de gain K qui donne une matrice de dimension égale à celle de la matrice A d'évolution d'état.

Maintenant que nous venons d'expliquer les lois physiques qui régissent la réaction du véhicule à un angle de braquage non nul des roues arrière, nous expliquons comment quantifier K dans un exemple de loi de commande pour obtenir la stabilité.

Le vecteur de gain K est quantifié de manière à ce que la matrice d'asservissement $A_{cl}$ en boucle fermée comporte des pôles à partie réelle négative.

Comme on l'a vu précédemment, la matrice $A_{cl}$ comporte des coefficients qui dépendent de la vitesse. La quantification optimale du vecteur K pour une vitesse v donnée du véhicule n'est pas nécessairement optimale pour une autre vitesse. Le vecteur de gain K comporte des valeurs dédiées à une vitesse v courante du véhicule à l'instant où le vecteur de gain K est exploité.

Lorsque le dispositif 40 de contrôle de trajectoire est prévu pour fonctionner uniquement à une vitesse v prédéterminée et éventuellement à des vitesses dans une plage de tolérance qui encadre la vitesse v prédéterminée, le module d'élaboration 50 comprend une colonne de cellules mémoire pour contenir les coordonnées du vecteur de gain K qui comprennent les coefficients de proportionnalité $k_\beta$, $k_r$, $k_\Psi$, $k_y$.

Lorsque le dispositif 40 de contrôle de trajectoire est prévu pour fonctionner dans une plage étendue de vitesses v du véhicule, le module d'élaboration 50 peut comprendre plusieurs colonnes de cellules mémoire, chaque colonne contenant les coordonnées du vecteur de gain K adaptée à une valeur discrète de vitesse. Les valeurs du vecteur de gain K dédiées à une vitesse v courante du véhicule qui est comprise entre deux valeurs discrètes de vitesse les plus proches auxquelles sont attribuées des colonnes de cellules mémoire, sont calculées par approximation linéaire entre les valeurs des deux colonnes.

On peut aussi prévoir une seule colonne de cellules mémoire dans lesquelles sont téléchargées les valeurs du vecteur de gain K au fur et à mesure de l'évolution de vitesse du véhicule. La colonne de cellules mémoire joue alors le rôle de tampon d'exécution du module d'élaboration 50.

Le module d'élaboration 50 effectue la multiplication du vecteur d'état x par le vecteur de gain K en temps réel, c'est-à-dire à une fréquence d'échantillonnage et d'exécution élevée, par exemple à 50 Hz ou plus, pour ne pas nuire à la stabilité de la boucle de régulation.

Les valeurs du vecteur de gain K sont quantifiées hors ligne, c'est-à-dire à une fréquence d'échantillonnage et d'exécution plus faible que la fréquence temps réel, par exemple à 1 Hz ou moins, voire à fréquence nulle. A fréquence nulle, les valeurs du vecteur de gain K sont calculées une seule fois puis mises à disposition en mémoire, éventuellement pour plusieurs véhicules du même type. La quantification hors ligne peut se faire dans le dispositif 40 si celui-ci dispose des ressources de calcul suffisantes. La quantification hors ligne peut se faire aussi dans des calculateurs puissants à disposition des services de développement des véhicules de façon à ne pas augmenter le coût du dispositif 40.

A titre purement illustratif et non exhaustif, on explique à présent un exemple de procédé de production possible hors ligne du vecteur de gain K pour une vitesse v unique du véhicule. On comprendra que les actions du procédé sont répétées autant de fois que nécessaire pour couvrir plusieurs vitesses possibles du véhicule. Lorsque l'ensemble des vitesses possibles est balayé, le stockage des valeurs du vecteur de gain K évite de devoir réactiver le procédé de production.

On rappelle que les théorèmes de stabilité dynamique des systèmes linéaires exigent que les pôles de la matrice $A_{cl}=A+B_rK$ soient à partie réel négative. On rappelle aussi que cette exigence est satisfaite s'il existe une fonction $V(x)=x^T P x$, avec P une matrice carrée définie positive, dite fonction de Lyapunov, telle que :

$$\frac{\partial V}{\partial t} < 0 \quad \forall x \in \mathrm{R}^4$$

On rappelle qu'une matrice carrée est définie positive, respectivement négative lorsque la forme quadratique définie par la matrice est positive, respectivement négative, pour tout vecteur x non nul. Ceci revient par exemple à dire dans le cas ci-dessus pour la matrice P que la fonction V(x) est positive pour toute valeur de x non nulle.

Les règles de dérivation habituelles des produits matriciels et le choix de remplacer la dérivée du vecteur x par le produit de la matrice $A_{cl}$ avec le vecteur x, conduisent à l'équation matricielle équivalente suivante :

$$x^T \cdot A_{cl}^T \cdot P \cdot x + x^T \cdot P \cdot A_{cl} \cdot x < 0 \quad \forall x \in \mathrm{R}^4$$

Le membre de gauche de l'inégalité ci-dessus exprime une matrice définie négative dans laquelle en remplaçant la matrice $A_{cl}$ par son expression en fonction de A et K :

$$\left(A + B_r \cdot K\right)^T \cdot P + P \cdot \left(A + B_r \cdot K\right) \prec 0$$

L'inéquation matricielle ci-dessus contient deux inconnues tensorielles, le vecteur K et la matrice P. Le vecteur K et la matrice P doivent être solution de l'inéquation matricielle.

L'inéquation matricielle ci-dessus est difficile à résoudre car elle constitue un polynôme tensoriel quadratique de part le produit de la matrice inconnue P par le vecteur inconnu K qu'elle comporte.

En multipliant à gauche et à droite chacun des membres de l'inéquation ci-dessus par une matrice $Q=P^{-1}$ et en effectuant le changement de variable bijectif $Y=K \cdot Q$, on obtient l'inéquation matricielle ci-dessous :

$$Q \cdot \left(A^T + K^T \cdot B_r^T\right) + \left(A + B_r \cdot K\right) \cdot Q \prec 0$$

En développant les membres de l'inéquation ainsi obtenue, on observe que l'inéquation matricielle est linéaire par rapport aux deux nouvelles inconnues Q et Y :

$$Q \cdot A^T + Y^T \cdot B_r^T + A \cdot Q + B_r \cdot Y \prec 0$$

Il existe de nombreux outils du commerce permettant de résoudre les inégalités matricielles linéaires. A titre d'exemple purement illustratif et non exhaustif, c'est notamment le cas de « Toolbox LMI » sous « Matlab » bien connu. Il existe aussi de tels outils logiciels sous licence GNU qu'on peut retrouver librement sur Internet.

On utilise alors l'un de ces outils connus pour retrouver par optimisation convexe la matrice inconnue Q et le vecteur inconnu Y vérifiant l'inégalité matricielle linéaires LMI ci-dessus.

L'utilisation de l'outil au sein du procédé permet alors d'obtenir le vecteur de gain K en multipliant simplement le vecteur inconnu Y retrouvé par l'inverse de la matrice inconnue Q retrouvée.

L'utilisation du vecteur de gain K dans le dispositif 40 permet d'asservir le retour d'état du vecteur x à une valeur de référence correspondant à une absence d'écart de trajectoire, en agissant sur le braquage des roues arrière. Comme toute boucle d'asservissement, celle mise en oeuvre par le dispositif 40 possède un temps de réponse lié aux différentes fonctions de transfert du véhicule mises à contribution.

Pour réduire le temps de réponse, on introduit une constante ξ positive dans la résolution de l'inégalité matricielle de la façon suivante :

$$Q \cdot A^T + Y^T \cdot B_r^{\ T} + A \cdot Q + B_r \cdot Y + 2\xi \cdot Q \prec 0$$

Pour s'assurer que le vecteur de gain K obtenu ne génère pas une consigne de braquage aux roues arrières au-delà de celle à laquelle peuvent répondre les actionneurs 19, 20, on fournit à l'outil des valeurs maximales admissibles d'angle de braquage $\delta_r^{\ max}$ des roues arrière et on lui demande de respecter la contrainte suivante sur le vecteur Y et la matrice Q :

$$\begin{pmatrix} 1 & \dfrac{1}{\delta_r^{\ max}} Y \\ \dfrac{1}{\delta_r^{\ max}} Y^T & Q \end{pmatrix} \succ= 0$$

Pour s'assurer que le vecteur de gain K obtenu ne provoque pas d'écarts de trajectoire au delà de valeurs maximales admissibles dans la mesure où le début de la correction est fait à l'intérieur d'une région de conduite nominale, on fournit à l'outil des valeurs maximales admissibles de variable d'état $\pm\beta^N_{\ max}$, $\pm r^N_{\ max}$, $\pm\Psi^N_{\ max}$, $\pm y_L^N_{\ max}$ définissant une région de conduite nominale maximale et on lui demande de respecter la contrainte suivante sur chacune des huit matrices comprenant la matrice Q et une matrice ligne zi, i variant de 1 à 8 :

$$\begin{pmatrix} 1 & z_i \\ z_i^T & Q \end{pmatrix} \succ= 0$$

On configure enfin l'outil pour effectuer la recherche par optimisation convexe en minimisant la trace de la matrice inconnue Q dans le respect des contraintes évoquées ci-dessus.

L'invention que nous expliquons ci-dessous, ne se limite pas à la loi de commande qui vient d'être expliquée ci-dessus. On comprendra que d'autres valeurs du gain K calculées avec d'autres algorithmes que celui-ci-dessus expliqué, peuvent convenir à la mise en oeuvre du procédé basé sur les ensembles d'états atteignables. Il suffit bien entendu que la fonction de transfert en boucle fermée de l'asservissement soit, de façon connue en soi, à pôles négatifs conformément aux critères de stabilité habituels, de sorte que la consigne de braquage $\delta_r^*$ varie de manière optimisée.

Comme on le voit sur la figure 2, le dispositif 40 de contrôle de trajectoire comprend un module de supervision 48 qui génère un signal sig pour activer le module 50 d'élaboration lorsque module de supervision 48 détecte en temps réel un risque calculé de franchissement de seuil par l'un des écarts β, r, $\Psi_L$, $y_L$.

Le module de supervision 48 comprend un mécanisme paramétré hors ligne pour déterminer en temps réel un ensemble w d'un ou plusieurs maxima $\beta^{max}$, $r^{max}$, $\Psi_L^{max}$, $y_L^{max}$ atteignables par les écarts β, r, $\Psi_L$, $y_L$ au cas où le module de supervision 48 activerait le module 50 d'élaboration, de manière à détecter le risque de franchissement lorsque l'un des maxima atteignables $\beta^{max}$, $r^{max}$, $\Psi_L^{max}$, $y_L^{max}$, est supérieur ou égal en valeur absolue à une valeur de seuil associé à chaque écart. A titre purement illustratif et non exhaustif, le seuil associé à l'angle de dérive β a une valeur prédéterminée de 5°, le seuil associé à la vitesse de lacet r a une valeur prédéterminée de 5°/s, le seuil associé à l'écart d'angle de cap $\Psi_L$ a une valeur prédéterminée de 5°, le seuil associé à l'écart latéral $y_L$ a une valeur prédéterminée égale à la demi différence entre la largeur de la voie de circulation et la largeur du véhicule.

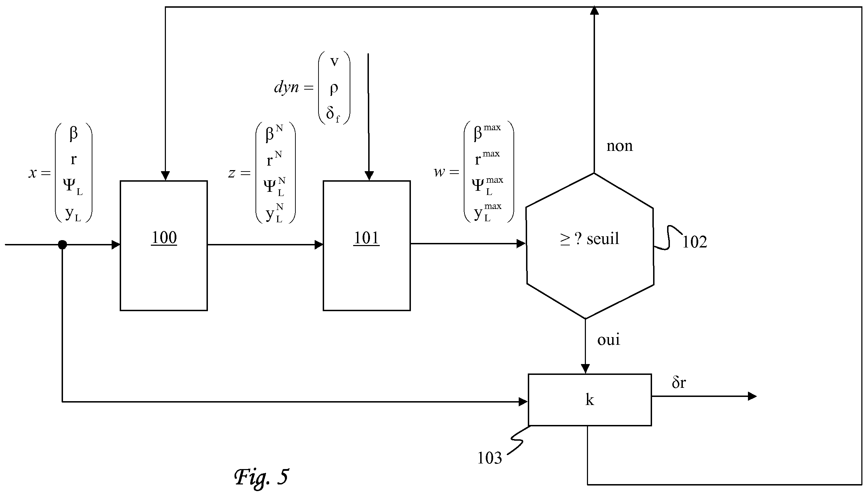

Le mécanisme du module de supervision 48 est paramétré hors ligne, en d'autres termes typiquement à une fréquence inférieure à celle du cadencement temps réel, au moyen de tout ou partie des étapes du procédé de contrôle de trajectoire du véhicule, expliqué à présent en référence à la figure 5.

Le procédé produit en temps réel, à partir des grandeurs représentatives des écarts β, r, $\Psi_L$, $y_L$ entre la trajectoire de référence 30 et la trajectoire effective du véhicule, la consigne de braquage $\delta_r^*$ applicable à la ou aux roues arrière du véhicule.

Lorsqu'elle est appliquée à la ou aux roues arrière du véhicule, la consigne de braquage $\delta_r^*$ permet de maintenir ou de ramener le véhicule sur sa trajectoire de référence sans interférer la commande du conducteur sur les roues avant. Le procédé comprend les étapes suivantes.

Une étape 100 consiste à accéder en temps réel à aux grandeurs représentatives des écarts β, r, $\Psi_L$, $y_L$ qui définissent le vecteur d'état x, de manière à définir une zone de départ z bornée par des valeurs nominales courantes $\beta^N$, $r^N$, $\Psi_L^N$, $y_L^N$.

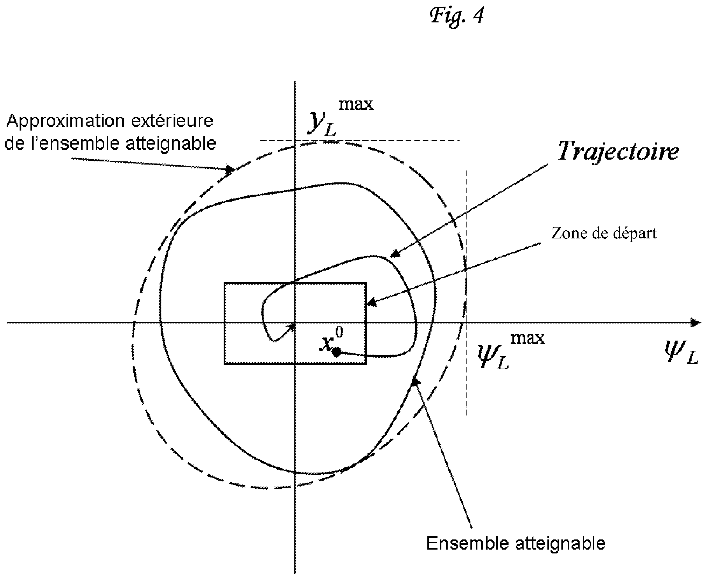

Sur la figure 4, la zone de départ z est par exemple représentée par un rectangle dans le plan des variables d'état $\Psi_L$, $y_L$ en supposant nulles les variables d'état $\beta$, $r$.

Un angle de braquage $\delta_r$ des roues arrière asservi à la consigne de braquage $\delta_r^*$ fait suivre à l'extrémité du vecteur d'état x une trajectoire qui part du point courant $x^0$ représenté sur la figure pour aboutir à un état final d'équilibre au centre du repère, les variables d'état $\Psi_L$, $y_L$ étant alors nulles. Le point courant $x^0$ de l'extrémité du vecteur d'état x est celui observé à l'instant t de scrutation des variables d'état en temps réel.

On comprendra que la trajectoire de l'extrémité du vecteur d'état x sur la figure 4 n'est pas la trajectoire du véhicule dans l'espace physique sur la chaussée mais qu'elle en est la transcription dans l'espace des états, relatif aux écarts par rapport à la trajectoire 30 de référence du véhicule dans l'espace physique, telle que représentée sur la figure 3.

Le rectangle de la figure contient les points de coordonnées $\Psi_L$, $y_L$ tels que :

$$-\Psi_L^{\,N} < \Psi_L < +\Psi_L^{\,N} \text{ et } -y_L^{\,N} < y_L < +y_L^{\,N}$$

Avant de converger sur l'état final d'équilibre, bien entendu en absence de perturbation majeure qui ne pourrait être compensée par un braquage des roues arrière, la trajectoire de l'extrémité du vecteur x peut sortir de la zone de départ z mais sans jamais sortir d'un ensemble atteignable qui, sur la figure 4, est limité par une courbe fermée irrégulière.

On comprendra que la zone de départ et l'ensemble atteignable sont en fait des hyper volumes dans un espace de dimension égale au nombre de variables d'état, limités par des hyper surfaces.

Associée à chaque variable d'état, plus précisément à chaque écart $\beta$, $r$, $\Psi_L$, $y_L$, le dispositif 40 contient en mémoire une liste de valeurs nominales $\beta^N$, $r^N$, $\Psi_L^N$, $y_L^N$ discrètes comprises entre zéro et une valeur nominale maximale $\beta^N_{max}$, $r^N_{max}$, $\Psi_L^N{}_{max}$, $y_L^N{}_{max}$ :

$$|\beta| \rightarrow \{0{,}5° \; ; \; 1° \; ; \; 1{,}5° \; ; \ldots \; ; \; \beta^N_{max}-1° \; ; \; \beta^N_{max}-0{,}5° \; ; \; \beta^N_{max}\}$$

$$|r| \rightarrow \{0{,}5°/s \; ; \; 1°/s \; ; \; 1{,}5°/s \; ; \ldots \; ; \; r^N_{max}-1°/s \; ; \; r^N_{max}-0{,}5°/s \; ; \; r^N_{max}\}$$

$$|\Psi_L| \rightarrow \{0{,}5° \; ; \; 1° \; ; \; 1{,}5° \; ; \ldots \; ; \; \Psi_L^N{}_{max}-1° \; ; \; \Psi_L^N{}_{max}-0{,}5° \; ; \; \Psi_L^N{}_{max}\}$$

$$|y_L| \rightarrow \{0{,}1m \; ; 0{,}2m \; ; 0{,}3m \; ; \ldots \; ; y_L^N{}_{max}-0{,}2m \; ; y_L^N{}_{max}-0{,}1m \; ; y_L^N{}_{max}\}$$

Le module 48 comporte des instructions de programme pour définir la zone z de départ en retenant dans la liste la valeur de $\beta^N$, $r^N$, $\Psi_L^N$, $y_L^N$ celle qui est immédiatement supérieure à la valeur absolue d'écart $|\beta|$, $|r|$, $|\Psi|$, $|y_L|$ correspondante telle que reçue en entrée.

Une étape 101 consiste en première phase à rechercher par optimisation convexe une matrice de convergence M qui satisfait les inégalités matricielles linéaires suivantes lorsqu'on ne tient pas compte de la commande de braquage $\delta_f^*$ imposée par le conducteur sur les roues avant.

M à trace minimale parmi les matrices $M \in R^4 \otimes R^4$ telles que :

$$M \succ 0, M = M^T \text{ et il existe } \alpha_1 > 0, \; \alpha_2 > 0 \text{ tels que}$$

$$\begin{pmatrix} M \cdot A_{cl}^T + A_{cl} \cdot M + \alpha_1 M & B_\rho \rho^{max} & 0 \\ B_\rho^T \rho^{max} & -\alpha_2 & 0 \\ 0 & 0 & \alpha_2 - \alpha_1 \end{pmatrix} \prec = 0$$

$$\begin{pmatrix} 1 & z_i \\ z_i^{\ T} & M \end{pmatrix} \succ 0 \ \ pour \ \ i=1,2,\ldots,2^3$$

Avec zi = $[\pm\beta^N, \pm r^N, \pm\Psi_L^{\ N}, \pm y_L^{\ N}]^T$

Lorsqu'on tient compte de la commande de braquage $\delta_f{}^*$ imposée par le conducteur sur les roues avant, la matrice de convergence M satisfait les inégalités matricielles linéaires suivantes.

$$M \succ 0, M = M^T \ \ et \ il \ existe \ \alpha_1>0, \ \alpha_2>0 \ tels \ que$$

$$\begin{pmatrix} M \cdot A_{cl}^{\ T} + A_{cl} \cdot M + \alpha_1 M & B_f \delta_f^{\ max} & B_\rho \rho^{\ max} & 0 \\ B_f^T \delta_f^{\ max} & -\alpha_2 & 0 & 0 \\ B_\rho^T \rho^{\ max} & 0 & -\alpha_3 & 0 \\ 0 & 0 & 0 & \alpha_2 + \alpha_3 - \alpha_1 \end{pmatrix} \preceq = 0$$

$$\begin{pmatrix} 1 & z_i \\ z_i^{\ T} & M \end{pmatrix} \succ 0 \ \ pour \ \ i=1,2,\ldots,2^3$$

Les inégalités matricielles dépendent des variables dynamiques v et p lorsqu'on ne tient pas compte de la commande de braquage $\delta_f{}^*$ imposée par le conducteur sur les roues avant et dépendent des variables dynamiques v, p et $\delta_f$ lorsqu'on tient compte de la commande de braquage $\delta_f{}^*$ imposée par le conducteur sur les roues avant.

L'étape 101 reçoit en conséquence les variables dynamiques appropriées. De façon à ne pas devoir recalculer la matrice M en permanence alors que les variables dynamiques changent constamment de valeurs, on définit selon le cas deux ou trois listes de valeurs discrètes associées à chaque variable dynamique :

$$|v| \rightarrow \{0,5m/s \ ; \ 1m/s \ ; \ 1,5m/s \ ;\ldots \ ; \ v_{max}\text{-}1m/s \ ; \ v_{max}\text{-}0,5m/s \ ; \ v_{max}\}$$

$$|\rho| \rightarrow \{1/1000m \ ; \ 1/800m \ ; \ 1/600m \ ;\ldots \ ; \ 1/50m \}$$

$$|\delta_f| \rightarrow \{0,5° \ ; \ 1° \ ; \ 1,5° \ ;\ldots \ ; \ \delta_{fmax}\text{-}1° \ ; \ \delta_{fmax}\text{-}0,5° \ ; \ \delta_{fmax}\}$$

La valeur retenue est alors celle directement supérieure à la valeur courante.

La matrice M trouvée décrit un ellipsoïde qui, comme il apparait sur la figure 4, constitue une approximation extérieure de l'ensemble atteignable de manière à englober l'ensemble atteignable.

Toujours dans l'étape 101, on détermine ensuite en temps réel un ensemble de valeurs maximales atteignables $\beta^{max}$, $r^{max}$, $\Psi_L{}^{max}$, $y_L$ par les écarts $\beta$, $r$, $\Psi_L$, $y_L$ en cas d'application de la consigne de braquage $\delta_r{}^*$ à la ou aux roues arrière du véhicule. Les valeurs maximales sont égales aux racines carrées des éléments de la diagonale de la matrice M de convergence :

$$\left|\beta^{\ max}\right| = \sqrt{M(1,1)}$$

$$\left|r^{\ max}\right| = \sqrt{M(2,2)}$$

$$\left|\Psi_L^{\ max}\right| = \sqrt{M(3,3)}$$

$$\left| y_L^{max} \right| = \sqrt{M(4,4)}$$

Lorsque la puissance de calcul du dispositif 40 est suffisante, il comprend un ensemble de cellules mémoire de programme accédant en temps réel aux grandeurs représentative des écarts $\beta$, r, $\Psi_L$, $y_L$ en reçues en entrée 41, 42, 43, 44 du dispositif. Les cellules mémoire contiennent alors un programme pour l'exécution de l'étape 101 du procédé lorsque le programme est exécuté sur un ordinateur, notamment sur un processeur embarqué dans le dispositif 40.

Lorsque la puissance de calcul du dispositif 40 est insuffisante, le dispositif comprend un ensemble de cellules mémoire de données adressables en temps réel par les grandeurs représentatives d'écarts $\beta$, r, $\Psi_L$, $y_L$ en reçues en entrée 41, 42, 43, 44 du dispositif et contenant une structure de données en quatre dimmensions qui comportent les maxima atteignables $\beta^{max}$, $r^{max}$, $\Psi_L^{max}$, $y_L^{max}$ associés à chacune des combinaisons possibles de valeurs discrètes de la grandeur représentative, notamment du vecteur x.

L'ensemble des valeurs de maxima atteignables $\beta^{max}$, $r^{max}$, $\Psi_L^{max}$, $y_L^{max}$ est alors calculé hors ligne préalablement dans un ordinateur extérieur puis téléchargé dans la structure de données accédée ensuite en temps réel par le module 48.

Une étape 102 consiste ensuite à comparer chaque maximum atteignable au seuil correspondant de façon à déclencher une étape 103 si un maximum dépasse le seuil correspondant ou à retourner dans l'étape 100 pour réitérer le processus.

L'étape 103 consiste à élaborer en temps réel la consigne de braquage $\delta_r^*$ variant linéairement par rapport à chaque écart $\beta$, r, $\Psi_L$, $y_L$ reçu avec le coefficient de proportionnalité K quantifié hors ligne comme expliqué ci-dessus. L'étape 100 est réitérée en parallèle.

## Revendications

1.  Dispositif (40) de contrôle de trajectoire d'un véhicule (1), comprenant d'une part au moins une entrée (43, 44) de réception d'au moins une grandeur représentative d'un ou plusieurs écarts ($\Psi_L$, $y_L$) entre une trajectoire de référence (30) et une trajectoire effective du véhicule, et d'autre part au moins une sortie (46) de production en temps réel d'au moins une consigne de braquage ($\delta_r^*$) applicable à au moins une roue arrière du véhicule (1) de manière à maintenir et/ou ramener ledit véhicule sur sa trajectoire de référence, comprenant :

    - au moins un module (50) d'élaboration en temps réel de ladite consigne de braquage ($\delta_r^*$) variant linéairement par rapport à chaque écart ($\Psi_L$, $y_L$) reçu avec un coefficient de proportionnalité ($k_\psi$, $k_y$) quantifié hors ligne de façon à optimiser la manière de varier de la consigne de braquage ($\delta_r^*$) ;
    - au moins un module de supervision (48) paramétré hors ligne pour activer le module (50) d'élaboration lorsque le module de supervision (48) détecte en temps réel un risque calculé de franchissement de seuil par au moins un écart ($\Psi_L$, $y_L$) et qui comprend des moyens pour déterminer en temps réel au moins un maximum atteignable ($\Psi_L y_L^{max}$) par au moins un écart ($\Psi_L$, $y_L$) en cas d'activation du module (50) d'élaboration de manière à détecter ledit risque de franchissement lorsque ledit maximum atteignable ($\Psi_L$, $y_L^{max}$) est supérieur ou égal à une valeur de seuil prédéterminée, **caractérisé en ce que** :
    - le ou les maxima atteignables ($\Psi_L^{max}$, $y_L^{max}$) sont calculés hors ligne au moyen d'un programme de recherche par optimisation convexe d'une matrice de convergence (M) qui satisfait au moins une inégalité matricielle linéaire de sorte que lesdits maxima atteignables ($\Psi_L^{max}$, $y_L^{max}$) sont égaux aux racines carrées des éléments diagonaux de ladite matrice de convergence (M).

2.  Dispositif selon la revendication 1, **caractérisé en ce que** lesdits moyens comprennent un ensemble de cellules mémoire de données adressables en temps réel par au moins ladite grandeur représentative d'un ou plusieurs écarts ($\Psi_L$, $y_L$) reçue en entrée (43, 44) du dispositif et contenant le ou les maxima atteignables ($\Psi_L^{max}$, $yL^{max}$) associés à des valeurs discrètes de ladite grandeur représentative.

3.  Dispositif selon la revendication 1, **caractérisé en ce que** lesdits moyens comprennent un ensemble de cellules mémoire de programme accédant en temps réel à au moins ladite grandeur représentative d'un ou plusieurs écarts ($\Psi_L$, $y_L$) reçue en entrée (43, 44) du dispositif et contenant ledit programme de recherche par optimisation convexe.

4.  Dispositif (40) selon la revendication 3, **caractérisée en ce que** ledit programme de recherche par optimisation convexe part d'une zone de départ ($Z_i$) minimale englobant le ou les écarts ($\Psi_L$, $y_L$).

**5.** Dispositif (40) selon la revendication 4 **caractérisée en ce que** ladite zone de départ ($Z_i$) minimale englobe aussi au moins une valeur de contexte dynamique (v, p).

**6.** Procédé de contrôle de trajectoire d'un véhicule en produisant en temps réel, à partir d'au moins une grandeur représentative d'un ou plusieurs écarts ($\Psi_L$, $y_L$) entre une trajectoire de référence et une trajectoire effective du véhicule, au moins une consigne de braquage ($\delta_r$*) applicable à au moins une roue arrière du véhicule de manière à maintenir et/ou ramener ledit véhicule sur sa trajectoire de référence, comprenant des étapes consistant à :

- déterminer (101) en temps réel au moins un maximum atteignable ($\Psi_L^{max}$, $y_L^{max}$) par au moins un écart ($\Psi_L$, $y_L$) en cas d'application d'une consigne de braquage ($\delta_r$*) à au moins une roue arrière du véhicule ;
- élaborer (103) en temps réel lorsque ledit maximum atteignable ($\Psi_L^{max}$, $y_L^{max}$) est supérieur ou égal à une valeur de seuil prédéterminée, ladite consigne de braquage ($\delta_r$*) variant linéairement par rapport à chaque écart ($\Psi_L$, $y_L$) reçu avec un coefficient de proportionnalité ($k_\Psi$, $k_y$) quantifié hors ligne de façon à optimiser la manière de varier de la consigne de braquage ($\delta_r$*) de manière à appliquer ladite consigne de braquage ($\delta_r$*) à au moins une roue arrière du véhicule, **caractérisé en ce qu'**il comprend des étapes consistant à :
- accéder (100) en temps réel à au moins ladite grandeur représentative d'un ou plusieurs écarts ($\Psi_L$, $y_L$) ;
- rechercher (101) par optimisation convexe une matrice de convergence (M) qui satisfait au moins une inégalité matricielle linéaire de sorte que lesdits maxima atteignables ($\Psi_L$, $y_L^{max}$) sont égaux aux racines carrées des éléments diagonaux de ladite matrice de convergence (M).

**7.** Programme d'ordinateur comprenant des instructions de code de programme pour l'exécution des étapes du procédé selon la revendication 6 lorsque ledit programme est exécuté sur un ordinateur.

**Patentansprüche**

**1.** Vorrichtung (40) zur Steuerung der Bewegungsbahn eines Fahrzeugs (1), welche einerseits wenigstens einen Eingang (43, 44) zum Empfang wenigstens einer Größe, die für eine oder mehrere Abweichungen ($\Psi_L$, $y_L$) zwischen einer Referenzbewegungsbahn (30) und einer tatsächlichen Bewegungsbahn des Fahrzeugs repräsentativ ist, und andererseits wenigstens einen Ausgang (46) zur Erzeugung in Echtzeit wenigstens eines Einschlagsollwertes ($\delta_r$*), der an wenigstens einem Hinterrad des Fahrzeugs (1) anzuwenden ist, um das Fahrzeug auf seiner Referenzbewegungsbahn zu halten und/oder zu ihr zurückzuführen, umfasst, umfassend:

- wenigstens ein Modul (50) zur Erzeugung in Echtzeit des Einschlagsollwertes ($\delta_1$*), der bezüglich jeder empfangenen Abweichung ($\Psi_L$, $y_L$) linear mit einem offline quantifizierten Proportionalitätskoeffizienten ($k_\Psi$, $k_y$) variiert, um die Art und Weise des Variierens des Einschlagsollwertes ($\delta_r$*) zu optimieren;
- wenigstens ein offline parametriertes Überwachungsmodul (48), um das Modul (50) zur Erzeugung zu aktivieren, wenn das Überwachungsmodul (48) in Echtzeit ein berechnetes Risiko der Überschreitung eines Schwellenwertes durch wenigstens eine Abweichung ($\Psi_L$, $y_L$) erkennt, und welches Mittel zur Bestimmung in Echtzeit wenigstens eines Maximums ($\Psi_L^{max}$, $y_L^{max}$) umfasst, das durch wenigstens eine Abweichung ($\Psi_L$, $y_L$) im Falle einer Aktivierung des Moduls (50) zur Erzeugung erreichbar ist, um das Überschreitungsrisiko zu erkennen, wenn das erreichbare Maximum ($\Psi_L^{max}$, $y_L^{max}$) größer als ein oder gleich einem vorbestimmten Schwellenwert ist, **dadurch gekennzeichnet, dass**:
- das oder die erreichbaren Maxima ($T_L^{max}$, $y_L^{max}$) offline mittels eines Programms zur Suche, durch konvexe Optimierung, einer Konvergenzmatrix (M) berechnet werden, welche wenigstens eine lineare Matrixungleichung erfüllt, derart, dass die erreichbaren Maxima ($\Psi_L^{max}$, $y_L^{max}$) gleich den Quadratwurzeln der Diagonalelemente der Konvergenzmatrix (M) sind.

**2.** Vorrichtung nach Anspruch 1, **dadurch gekennzeichnet, dass** die Mittel eine Menge von Datenspeicherzellen umfassen, die in Echtzeit durch wenigstens die für eine oder mehrere Abweichungen ($\Psi_L$, $y_L$) repräsentative Größe adressierbar sind, die am Eingang (43, 44) der Vorrichtung empfangen wird, und die das oder die erreichbaren Maxima ($\Psi_L^{max}$, $y_L^{max}$) enthalten, die diskreten Werten der repräsentativen Größe zugeordnet sind.

**3.** Vorrichtung nach Anspruch 1, **dadurch gekennzeichnet, dass** die Mittel eine Menge von Programmspeicherzellen umfassen, die in Echtzeit auf wenigstens die für eine oder mehrere Abweichungen ($\Psi_L$, $y_L$) repräsentative Größe zugreifen, die am Eingang (43, 44) der Vorrichtung empfangen wird, und die das Programm zur Suche durch konvexe Optimierung enthalten.

**4.** Vorrichtung (40) nach Anspruch 3, **dadurch gekennzeichnet, dass** das Programm zur Suche durch konvexe Optimierung von einem minimalen Ausgangsbereich ($Z_i$) ausgeht, der die Abweichung oder die Abweichungen ($\Psi_L$, $y_L$) umfasst.

**5.** Vorrichtung (40) nach Anspruch 4, **dadurch gekennzeichnet, dass** der minimale Ausgangsbereich ($Z_i$) auch wenigstens einen Wert des dynamischen Kontexts (v, p) umfasst.

**6.** Verfahren zur Steuerung der Bewegungsbahn eines Fahrzeugs, indem in Echtzeit, ausgehend von wenigstens einer Größe, die für eine oder mehrere Abweichungen ($\Psi_L$, $y_L$) zwischen einer Referenzbewegungsbahn (30) und einer tatsächlichen Bewegungsbahn des Fahrzeugs repräsentativ ist, wenigstens ein Einschlagsollwert ($\delta_r*$) erzeugt wird, der an wenigstens einem Hinterrad des Fahrzeugs anzuwenden ist, um das Fahrzeug auf seiner Referenzbewegungsbahn zu halten und/oder zu ihr zurückzuführen, Schritte umfassend, die in Folgendem bestehen:

- Bestimmen (101) in Echtzeit wenigstens eines Maximums ($\Psi_L{}^{max}$ $y_L{}^{max}$), das durch wenigstens eine Abweichung ($\Psi_L$, $y_L$) im Falle der Anwendung eines Einschlagsollwertes ($\delta_r*$) an wenigstens einem Hinterrad des Fahrzeugs erreichbar ist;
- Erzeugen (103) in Echtzeit, wenn das erreichbare Maximum ($\Psi_L{}^{max}$, $y_L{}^{max}$) größer als ein oder gleich einem vorbestimmten Schwellenwert ist, des Einschlagsollwertes ($\delta_r*$), der bezüglich jeder empfangenen Abweichung ($\Psi_L$, $y_L$) linear mit einem offline quantifizierten Proportionalitätskoeffizienten ($k_\Psi$, $k_y$) variiert, um die Art und Weise des Variierens des Einschlagsollwertes ($\delta_r*$) zu optimieren, um den Einschlagsollwert ($\delta_r*$) an wenigstens einem Hinterrad des Fahrzeugs anzuwenden, **dadurch gekennzeichnet, dass** es Schritte umfasst, die in Folgendem bestehen:
- Zugreifen (100) in Echtzeit auf wenigstens die Größe, die für eine oder mehrere Abweichungen ($\Psi_L$, $y_L$) repräsentativ ist;
- Suchen (101), durch konvexe Optimierung, einer Konvergenzmatrix (M), welche wenigstens eine lineare Matrixungleichung erfüllt, derart, dass die erreichbaren Maxima ($\Psi_L{}^{max}$, $y_L{}^{max}$) gleich den Quadratwurzeln der Diagonalelemente der Konvergenzmatrix (M) sind.

**7.** Computerprogramm, welches Programmcodeanweisungen zur Ausführung der Schritte des Verfahrens nach Anspruch 6, wenn das Programm auf einem Computer ausgeführt wird, umfasst.

**Claims**

**1.** Device (40) for controlling the trajectory of a vehicle (1), comprising, on the one hand, at least one input (43, 44) for receiving at least one quantity representative of one or more deviations ($\Psi_L$, $y_L$) between a reference trajectory (30) and an actual trajectory of the vehicle, and, on the other hand, at least one output (46) for producing, in real time, at least one lock angle setpoint ($\delta_r*$) applicable to at least one rear wheel of the vehicle (1) so as to keep said vehicle on and/or bring said vehicle to its reference trajectory, comprising:

- at least one module (50) for generating, in real time, said lock angle setpoint ($\delta_r*$) varying linearly relative to each deviation ($\Psi_L$, $y_L$) received with a coefficient of proportionality ($k_\Psi$, $k_y$) quantified offline so as to optimise the way of varying the lock angle setpoint ($\delta_r*$);
- at least one supervision module (48) parameterised offline to activate the generation module (50) when the supervision module (48) detects, in real time, a computed risk of crossing of a threshold by at least one deviation ($\Psi_L$, $y_L$) and which comprises means for determining, in real time, at least one maximum ($\Psi_L{}^{max}$, $y_L{}^{max}$) achievable by at least one deviation ($\Psi_L$, $y_L$) in case of activation of the generation module (50) so as to detect said risk of crossing when said achievable maximum ($\Psi_L{}^{max}$, $y_L{}^{max}$) is greater than or equal to a predetermined threshold value, **characterized in that**:
- the achievable maximum or maxima ($\Psi_L{}^{max}$, $y_L{}^{max}$) is/are computed offline by means of a program for searching by convex optimisation for a convergence matrix (M) which satisfies at least one linear matrix inequality such that said achievable maxima ($\Psi_L{}^{max}$, $y_L{}^{max}$) are equal to the square roots of the diagonal elements of said convergence matrix (M).

**2.** Device according to Claim 1, **characterized in that** said means comprise a set of data memory cells addressable in real time by at least said quantity representative of one or more deviations ($\Psi_L$, $y_L$) received as input (43, 44) of the device and containing the achievable maximum or maxima ($\Psi_L{}^{max}$, $y_L{}^{max}$) associated with discrete values of said representative quantity.

3. Device according to Claim 1, **characterized in that** said means comprise a set of program memory cells accessing, in real time, at least said quantity representative of one or more deviations ($\Psi_L$, $y_L$) received as input (43, 44) of the device and containing said convex optimisation search program.

4. Device (40) according to Claim 3, **characterized in that** said convex optimisation search program starts from a minimum starting zone ($Z_i$) encompassing the deviation or deviations ($\Psi_L$, $y_L$).

5. Device (40) according to Claim 4, **characterized in that** said minimum starting zone ($Z_i$) also encompasses at least one dynamic context value (v, p).

6. Method for controlling the trajectory of a vehicle by producing, in real time, from at least one quantity representative of one or more deviations ($\Psi_L$, $y_L$) between a reference trajectory and an actual trajectory of the vehicle, at least one steering lock setpoint ($\delta_r^*$) applicable to at least one rear wheel of the vehicle so as to keep said vehicle on and/or bring said vehicle to its reference trajectory, comprising steps consisting in:

   - determining (101), in real time, at least one maximum ($\Psi_L^{max}$, $y_L^{max}$) achievable by at least one deviation ($\Psi_L$, $y_L$) in case of application of a steering lock setpoint ($\delta_r^*$) to at least one rear wheel of the vehicle;
   - generating (103), in real time when said achievable maximum ($\Psi_L^{max}$, $y_L^{max}$) is greater than or equal to a predetermined threshold value, said steering lock setpoint ($\delta_r^*$) varying linearly relative to each deviation ($\Psi_L$, $y_L$) received with a coefficient of proportionality ($k_\Psi$, $k_y$) quantified offline so as to optimise the way of varying the steering lock setpoint ($\delta_r^*$) so as to apply said steering lock setpoint ($\delta_r^*$) to at least one rear wheel of the vehicle, **characterized in that** it comprises steps consisting in:
   - accessing (100), in real time, at least said quantity representative of one or more deviations ($\Psi_L$, $y_L$);
   - searching (101) by convex optimisation for a convergence matrix (M) which satisfies at least one linear matrix inequality such that said achievable maxima ($\Psi_L^{max}$, $y_L^{max}$) are equal to the squared roots of the diagonal elements of said convergence matrix (M).

7. Computer program comprising program code instructions for executing steps of the method according to Claim 6 when said program is run on a computer.

Fig. 1

*Fig. 2*

*Fig. 3*

*Fig. 4*

Approximation extérieure
de l'ensemble atteignable

$y_L^{max}$

*Trajectoire*

Zone de départ

$x^0$

$\psi_L^{max}$

$\psi_L$

Ensemble atteignable

*Fig. 5*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7236884 B
- WO 2010125290 A
- EP 1544080 B1